# EUROPÄISCHE PATENTSCHRIFT

(11) **EP 0 695 417 B1**
(45) Veröffentlichungstag und Bekanntmachung des Hinweises auf die Patenterteilung: **30.06.1999**
(21) Anmeldenummer: 94915101.3
(22) Anmeldetag: 22.04.1994
(51) Int. Cl.: G01H 13/00

(54) **ULTRASCHALLMESSGERÄT MIT EINEM RESONATORKAMMERKÖRPER UND AUSSEN ANGEORDNETEN ELEKTRO-AKUSTISCHEN WANDLERN**
ULTRASONIC MEASUREMENT EQUIPMENT WITH RESONATOR CHAMBER BODY AND OUTER ELECTROACOUSTIC TRANSDUCERS
APPAREIL DE MESURE PAR ULTRA-SONS AYANT UNE CHAMBRE DE RESONANCE ET DES TRANSDUCTEURS ELECTRO-ACOUSTIQUES EXTERIEURS

(30) Priorität: 22.04.1993 DE 4313216
(43) Veröffentlichungstag der Anmeldung: 07.02.1996
(73) Patentinhaber: Max-Planck-Gesellschaft zur Förderung der Wissenschaften e.V. Berlin, 80539 München (DE)
(72) Erfinder: BUCKIN, Vitaly, D-37077 Göttingen (DE); DE MAEYER, Leo, D-37077 Göttingen (DE); FUNCK, Theodor, D-37077 Göttingen (DE)
(74) Vertreter: Schütz, Peter, Dipl.-Ing.
(86) Internationale Anmeldenummer: EP9401265
(87) Internationale Veröffentlichungsnummer: WO9424526

(56) Entgegenhaltungen:
- FR-A- 1 463 953
- US-A- 3 974 681
- US-A- 4 607 520

## Beschreibung

Die vorliegende Erfindung geht aus von einem Ultraschallmeßgerät mit den im Oberbegriff des Anspruchs 1 angegebenen Merkmalen und betrifft insbesondere eine Vorrichtung (im folgenden Ultraschallresonator genannt), mit deren Hilfe mit üblichen bekannten elektrischen Verfahren (z.B. Netzwerkanalysatoren) ebene Ultraschallwellenfelder in flüssigen Proben erzeugt und die Frequenzabhängigkeit der Amplitude und/oder der Phase dieser Resonanzen ausgemessen werden können. Solche Vorrichtungen werden vorwiegend für die Bestimmung der Schallgeschwindigkeit und der Schallabsorption von Proben im Ultraschallbereich verwendet.

Bei den bekannten Ultraschallresonatoren ist die Probe direkt zwischen den planaren, mit hoher Präzision parallel angeordneten Stirnflächen von elektro-akustischen Wandlern angeordnet. Die Wandler sind flüssigkeitsdicht in Durchbrechungen der Wände eines die Probe enthaltenden Hohlraums eingesetzt. Dieser bildet den sog. Resonatorhohlraum und die Wandler die akustisch aktiven Wände des Resonators, in dem sich zwischen den Wandlern das ebene Wellenfeld ausbildet.

Ein großes, bisher nicht zufriedenstellend gelöstes Problem dieser bekannten Anordnung stellt die spannungsfreie, für die Probe dichtende Befestigung der Wandler in sehr genauer paralleler Position dar. Besonders für aggressive Probenflüssigkeiten ist dieses Problem kaum lösbar. Außerdem besteht bei den meisten Abdichtungsverfahren die Gefahr einer hartnäckigen Haftung von Gasbläschen im Bereich der Dichtung. Durch die Anwesenheit solcher Gaseinschlüsse im Resonator wird die Ausbreitung des Wellenfeldes empfindlich gestört.

Aus US-A-3 974 681 ist ein Ultraschall-Blasendetektor bekannt, der zur Detektion von Gasblasen in einer ein Rohr durchströmenden Flüssigkeit durch Messung des Schallfeldes zwischen zwei außerhalb des Rohres angebrachten Schallwandlern eingerichtet ist. Die Schallwandler sind über rohrförmge Schallwellenleiter mit der Außenseite des Rohres gekoppelt, wobei die Geometrie der Schallwellenleiter so gewählt ist, daß eine Fokussierung des Schallfeldes im Inneren des Rohres erfolgt.

Es ist die Aufgabe der Erfindung, verbesserte Ultraschallmeßgeräte mit Ultraschallresonatoren zu schaffen, bei denen das Problem der Resonatorbandabdichtung entfällt.

Diese Aufgabe wird durch ein Ultraschallmeßgerät mit den Merkmalen gemäß Patentanspruch 1 gelöst. Vorteilhafte Ausführungsformen ergeben sich aus den abhängigen Ansprüchen.

Da die Ultraschallwandler bei den Ultraschallresonatoren des vorliegenden Ultraschallmeßgerätes außen (an einer Außenseite des den Resonatorhohlraum enthaltenden Körpers) akustisch an den Resonatorkammerkörper oder Probenkammerkörper gekoppelt sind, treten keinerlei Abdichtungsproble auf. Der Resonatorkammerkörper kann also ganz aus nichtpiezoelektrischem Material bestehen und aus beliebigem geeignetem Material hergestellt werden. Ebenso ist die Geometrie des innenliegenden Resonatorhohlraums und die äußere Form nur durch die akustischen Anforderungen eingeschränkt. So ist z.B. der Einsatz von handelsüblichen Glas- und Quarzglasküvetten, wie sie für die Spektralphotometrie verwendet werden, als Resonatorkammerkörper direkt möglich.

Als Materialien kommen alle für die entsprechenden Proben resistenten Festkörpermaterialien in Frage. Durch die Wahl geeigneter Resonatorkammerkörper nach ihrer Geometrie (z.B. Wandstärke) und ihren akustischen Parametern können die akustischen Eigenschaften der so gebildeten Resonatorzellen in weiten Grenzen optimiert und den Bedürfnissen der Ultraschallresonanzmessung angepaßt werden. Außerdem ist auf diese Weise eine Kombination von Ultraschallresonanzmessungen mit anderen Untersuchungsverfahren, z.B. optischen, potentiometrischen, konduktometrischen usw. leicht möglich.

Der oder die Wandler des vorliegenden Ultraschallmeßgerät sind vorzugsweise beweglich angeordnet, so daß sie von einer Ruhestellung, in der sie vom Resonatorkammerkörper entfernt sind, in eine Arbeitsstellung, in der sie am Resonatorkammerkörper außen anliegen, bewegt, z.B. translatorisch verschoben oder geschwenkt werden können. Die Wandler können auch dauerhaft an den Außenflächen der Resonatorkammerkörper (z.B. Küvetten für die Messung der Lichtabsorption oder der Fluoreszenz, Durchflußküvetten) angebracht und dann gegebenenfalls zusammen mit den Küvetten auswechselbar sein.

Als Ultraschallwandler können die allgemein üblichen, bekannten Wandler (piezo-elektrisch, kapazitiv, elektrostatisch) eingesetzt werden. Bei der Verwendung von piezoelektrischen Wandlern können die schallaktiven Oberflächen durch geeignete Beschichtungen in ihren akustischen Eigenschaften verbessert werden. Ebenso können die akustischen Eigenschaften des Resonatorkammerkörpers durch Beschichtung an seinen Oberflächen optimiert werden.

Auf den dem Resonatorkammerkörper zugewandten Oberflächen der akustischen Wandler sind elektrisch leitende Elektroden angeordnet, die mit Masse-Potential verbunden und gleichzeitig als HF-Abschirmung ausgebildet sind. Zwischen dieser Wandleroberfläche und der Oberfläche des Resonatorkammerkörpers muß ein optimaler akustischer Kontakt gewährleistet sein. Dies kann durch genaue Passung oder durch geeignete Koppelmaterialien erreicht werden.

Auf der entgegengesetzten Oberfläche der Wandler sind die HF-Elektroden angeordnet, zwischen denen und den elektronischen Schaltungen für Anregung bzw. Empfang sicherer elektrischer Kontakt hergestellt sein muß.

Die Bewegung der Wandler bezüglich der Oberflächen des Resonatorkammerkörpers kann automatisch durch das Einbringen dieses Körpers in das Gerät bzw. durch das Herausnehmen dieses Körpers aus dem Gerät ausgelöst werden. Dadurch werden Reinigungsoperationen erleichtert und eine Sterilisation oder ein Austausch des Resonatorkammerkörpers sowie die Verwendung von Einmalprodukten ermöglicht.

Im folgenden wird die Erfindung unter Bezugnahme auf die Zeichnungen näher beschrieben; dabei werden noch weitere Merkmale und Vorteile der Erfindung zur Sprache kommen.

Es zeigen:
- Fig. 1: eine schematische Darstellung eines Ultraschallresonanzgerätes mit einer Resonatorzelle gemäß dieser Erfindung. Als Beispiel ist eine Resonatorzelle gezeigt, die als Resonatorhohlraum für Durchflußmessungen ausgebildet ist, und
- Fig. 2: eine schematische Schnittansicht einer Resonatoranordnung mit Schichten zur Impedanzanpassung und beweglichen Wandlern. Als Beispiel ist eine Resonatorzelle aus einer handelsüblichen Glasküvette für spektralphotometrische Messungen gezeigt.

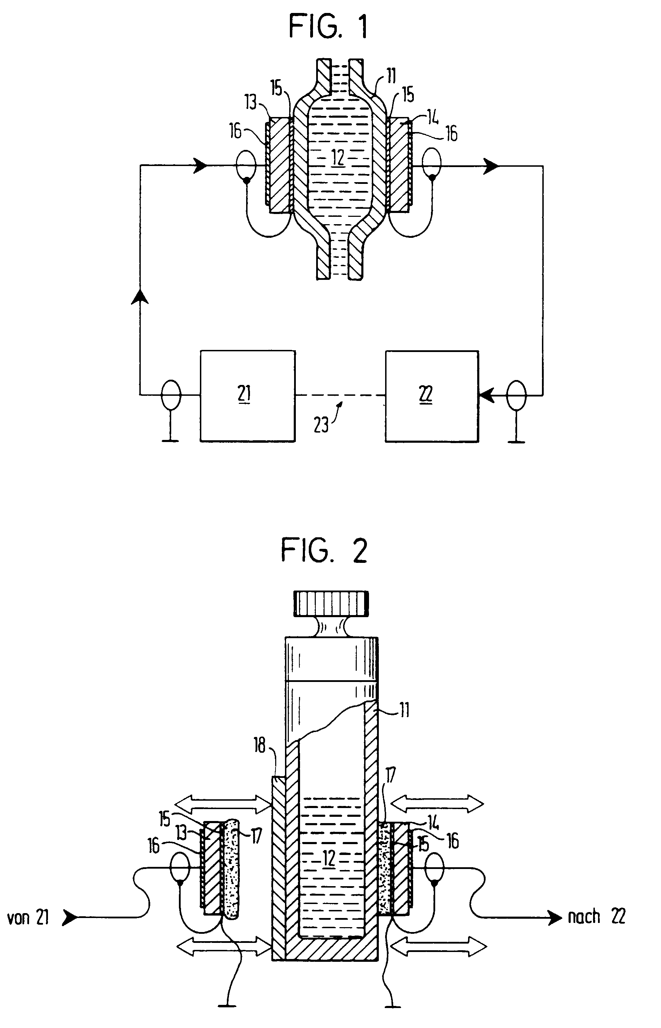

Das in Fig. 1 vereinfacht dargestellte Ultraschallmeßgerät enthält eine Ultraschallresonatorzelle 1 aus einem Resonatorkammerkörper 11, der in diesem Fall als Durchflußküvette ausgebildet ist, einem Anregungswandler 13 und einem Empfängerwandler 14. Im Inneren des Resonatorkammerkörpers befindet sich ein im Betrieb mit der Probe gefüllter Resonatorhohlraum 12. An planen und parallelen Außenflächen des Resonatorkammerkörpers sind die Wandler 13, 14, jeweils über aufgedampfte Metallschichten 15, die auf Masse-Potential liegen, akustisch an den Resonatorkammerkörper angekoppelt. Ebenfalls aus aufgedampften Metallschichten bestehende HF-Elektroden der Wandler befinden sich an deren dem Resonatorkammerkörper abgewandten Seite. Sie sind an ein übliches elektronisches Meßsystem 2 für elektrische Resonanzen angeschlossen, das nur im Prinzip durch ein anregendes System 21 und ein mit ihm frequenzgekoppeltes (23) Empfängersystem 22 angedeutet ist.

In Fig. 2 ist ein Ultraschallresonator schematisch dargestellt, der eine Spektralphotometer-Küvette als Resonatorkammerkörper 11 enthält. In diesem Beispiel sind die beiden Wandler 13 und 14 beweglich angeordnet. Der Empfängerwandler 14 ist in Arbeitsstellung, also im akustischen Kontakt mit der Küvettenaußenwand gezeigt. Zwischen Empfängerwandler und Küvettenwand ist eine Schicht eines die akustische Kopplung verbessernden Materials 17 angebracht. Auf der Seite des Anregungswandlers 13, der in Ruhestellung, also von der Küvette enfernt, gezeigt ist, befindet sich eine den akustischen Kontakt vermittelnde Schicht 17 an der Masse-Elektrode 15 des Anregungswandlers 13. An der Außenfläche der Küvette ist eine Schicht 18 angebracht, durch die die akustische Impendanz der akustisch aktiven Grenzfläche verändert wird. Solche Schichten, durch die die akustische Impendanz einer akustisch aktiven Fläche oder Wand an einen gewünschten Wert angepaßt wird, sind bekannt und können auf alle akustisch aktiven bzw. angeregten Flächen aufgebracht werden.

Die mechanische Verstellung der Wandler 13 und 14 zwischen Ruhe- und Arbeitsstellung kann in verschiedener Weise ausgelöst werden: a) manuell mechanisch, b) elektromechanisch oder c) automatisch beim Einsetzen oder Entfernen der Küvette.

Der Ultraschallresonator kann grundsätzlich eine in den Zeichnungen nicht dargestellte Einrichtung für die Thermostatisierung enthalten.

Die charakteristischen akustischen Eigenschaften des Ultraschallresonators (Resonanzfrequenzen, Halbwertsbreiten der Resonanzen u.a.) werden bestimmt durch die Grundfrequenz der elektro-akustischen Wandler, die akustischen Eigenschaften der Probe (Schallgeschwindigkeit und Schwächung des Ultraschalls durch Absorption, Streuung u.a.) und durch die Geometrie der Probe. Die akustischen Eigenschaften der Probe können aus den elektrischen Eigenschaften des Resonators berechnet werden. Bei Ultraschallmeßgeräten des in Fig. 2 dargestellten Typs können akustische Resonanzen bei solchen Frequenzen angeregt werden, für die eine ganze Zahl von akustischen Halbwellen genau dem Abstand der beiden planparallelen akustisch angeregten Flächen entspricht, die Probe einschließen. Die Frequenzen der am Empfängerwandler auftretenden Amplitudenmaxima sind durch die Ultraschallgeschwindigkeit und die Halbwertsbreiten der auftretenden Resonanzen sind durch die Ultraschallabsorption bestimmt.

Das vorliegende Ultraschallmeßgerät kann mehrere (z. B. parallelgeschaltete) Ultraschallresonatoren der beschriebenen Art enthalten.

## Patentansprüche

1. Ultraschallmeßgerät mit einem oder mehreren Ultraschallresonatoren zur Messung von Flüssigkeitsresonanzen im Ultraschallbereich, wobei jeder Resonator einen zur Aufnahme einer Probe dienenden und einen Resonanzhohlraum bildenden Resonatorkammerkörper (11) und einen oder mehrere elektro-akustische Wandler (13, 14) enthält, die außen an den Resonatorkammerkörper angekoppelt sind,
**dadurch gekennzeichnet**, daß auf den dem Resonatorkammerkörper zugewandten Oberflächen der akustischen Wandler elektrisch leitende, ebene Elektroden (15) angeordnet sind, die mit Masse-Potential verbunden sind und die in mechanischem Kontakt mit dem Resonatorkammerkörper stehen und an diesen durch genaue Passung oder durch eine zusätzliche, ebene Beschichtung (17, 18) akustisch angepaßt sind.

2. Ultraschallmeßgerät nach Anspruch 1, **dadurch gekennzeichnet**, daß die Wandler (13, 14) zwischen einer Arbeitsstellung, in der sie im akustischen Kontakt mit dem Resonatorkammerkörper stehen, und einer Ruhestellung, in der sie davon entfernt sind, beweglich gelagert sind.

3. Ultraschallmeßgerät nach Anspruch 2, **dadurch gekennzeichnet**, daß die eine ebene aktive Fläche aufweisenden Wandler senkrecht oder parallel zu dieser Ebene verschiebbar angeordnet sind.

4. Ultraschallmeßgerät nach Anspruch 2, **dadurch gekennzeichnet**, daß die Wandler schwenkbar gelagert sind.

5. Ultraschallmeßgerät nach einem oder mehreren der vorhergehenden Ansprüche, **dadurch gekennzeichnet,** daß die Beschichtungen (17,18) der Anpassung der akustischen Impedanz dienen.

6. Ultraschallmeßgerät nach einem oder mehreren der Ansprüche 1 bis 5, **dadurch gekennzeichnet,** daß die Außenfläche des Resonatorkammerkörpers (11), mit der die Ankopplung der Wandler erfolgt, mit einer Beschichtung (18) zur Anpassung der akustischen Impedanz versehen ist.

7. Ultraschallmeßgerät nach einem oder mehreren der vorhergehenden Ansprüche, **dadurch gekennzeichnet**, daß zwischen den Wandlern und den Außenflächen des Probenkammerkörpers Schichten (17,18) aus geeignetem, die akustische Kopplung verbesserendem Material vorgesehen sind.

## Claims

1. An ultrasonic measurement apparatus with one or more ultrasonic resonators for measuring resonances of liquids in the ultrasonic range, each resonator having a resonator chamber body serving to accomodate a specimen and forming a resonance cavity (11) and including one or more electroacoustic transducers (13, 14) being coupled from outside to said resonator chamber body,
**characterized in that**
on the surfaces of the acoustic transducers facing to said resonator chamber body are provided electrically conducting plane electrodes (15), which electrodes are connected with ground potential and in mechanical contact with the resonator chamber body and said electrodes are precisely fitted or acoustically adapted to said resonator chamber body by an additional plane coating (17, 18).

2. The ultrasonic measurement apparatus as set forth in claim 1, characterized in that said transducers (13, 14) are mounted movable between a working position, in which they are in acoustical contact with said resonator chamber body, and a resting position in which they are distant therefrom.

3. The ultrasonic measurement apparatus as set forth in claim 2, characterized in that said transducers having a plane active surface are arranged shiftable perpendicular or parallel to sai plane.

4. The ultrasonic measurement apparatus as set forth in claim 2, characterized in that said transducers are pivotally mounted.

5. The ultrasonic measurement apparatus as set forth in any of the preceding claims, characterized in that said coatings (17, 18) serve to adapt the acoustic impedance.

6. The ultrasonic measurement apparatus as set forth in any of the claims 1 to 5, characterized in that the external surface of said resonator chamber body (11) with which coupling said transducers is achieved, is provided with a coating (18) for adapting the acoustic impedance.

7. The ultrasonic measurement apparatus as set forth in any ofthe preceding claims, characterized in that between said transducers and said external surface of the non-piezoelectric specimen chamber body, coatings (17, 18) of a material suitable for improving the acoustic coupling are provided.

## Revendications

1. Appareil de mesure ultrasonore comportant un ou plusieurs résonateurs ultrasonores pour la mesure de résonances de liquide dans le domaine ultrasonore, dans lequel le résonateur comporte un corps de chambre de résonateur (11) servant à recevoir un échantillon de liquides et formant une cavité résonante et un ou plusieurs transducteurs électroacoustiques (13,14) qui sont couplés, à l'extérieur, au corps de chambre de résonateur, caractérisé en ce que les surfaces des transducteurs acoustiques tournées vers le corps de chambre de résonateur sont disposées des électrodes planes (15), conductrices de l'électricité, qui sont reliées au potentiel de la masse et qui se trouvent en contact mécanique avec le corps de chambre de résonateur et qui sont adaptées à celui-ci grâce à un ajustement précis ou bien par l'intermédiaire d'une couche plane additionnelle (17,18).

2. Appareil de mesure ultrasonore suivant la revendication 1 caractérisé en ce que les transducteurs (13,14) sont montés mobiles entre une position de travail dans laquelle ils se trouvent en contact acoustique avec le corps de chambre de résonateur et une position de repos dans laquelle ils sont éloignés de ce corps.

3. Appareil de mesure ultrasonore suivant la revendication 2 caractérisé en ce que les transducteurs, présentant une surface active plane, sont montés mobiles en translation perpendiculairement ou parallèlement à cette surface plane.

4. Appareil de mesure ultrasonore suivant la revendication 2 caractérisé en ce que les transducteurs sont montés à pivotement.

5. Appareil de mesure ultrasonore suivant l'une des revendications précédentes caractérisé en ce que les couches (17,18) servent à l'adaptation de l'impédance acoustique.

6. Appareil de mesure ultrasonore suivant une ou plusieurs des revendications 1 à 5 caractérisé en ce que la surface externe du corps de chambre de résonateur (11) avec laquelle est réalisé le couplage des transducteurs, est pourvue d'une couche (18) prévue pour l'adaptation de l'impédance acoustique.

7. Appareil de mesure ultrasonore suivant une ou plusieurs des revendications précédentes caractérisé en ce qu'entre les transducteurs et la surface externe du corps de chambre de résonateur sont prévues des couches d'un matériau approprié améliorant le couplage acoustique.
